# EUROPÄISCHE PATENTANMELDUNG

(11) **EP 1 734 336 A1**
(43) Veröffentlichungstag der Anmeldung: **20.12.2006**
(21) Anmeldenummer: 05105165.4
(22) Anmeldetag: 13.06.2005
(51) Int. Cl.: G01C 15/00, G01C 15/06

(54) **Geodätisches Zielobjekt und Vermessungssystem**

(71) Anmelder: Leica Geosystems AG, 9435 Heerbrugg (CH)
(72) Erfinder: Hinderling, Jürg, CH-9437, Marbach (CH); Schneider, Klaus, A-6850, Dornbirn (AT)
(74) Vertreter: Harmann, Bernd-Günther

(57) **Zusammenfassung**

In einem geodätischen Zielobjekt mit wenigstens einer Reflektorfläche, einem Empfangskanal mit einem Detektor (18) zum Empfang von durch eine Messeinheit (2") ausgesandter elektromagnetischer Strahlung (ES) und einem Sendekanal mit einer Strahlungsquelle (13') werden die zugehörige Sendeöffnung und/oder Empfangsöffnung in die Reflektorfläche integriert oder an die Reflektorfläche anschliessend ausgebildet, so dass innerhalb des Strahlquerschnitts (5") der von der Messeinheit (2") erzeugten Strahlung (ES) eine Emission von zur Datenübertragung modulierter Strahlung (RS) in Richtung auf die Messeinheit (2") erfolgen kann.

## Beschreibung

Die Erfindung betrifft ein geodätisches Zielobjekt nach dem Oberbegriff des Anspruchs 1, eine Modulkomponente für ein solches geodätisches Zielobjekt und ein Verfahren zur Datenübertragung bei geodätischen Messungen zur Positionsbestimmung des geodätischen Zielobjekts.

In vielen geodätischen Anwendungen erfolgt eine Vermessung von Punkten, indem dort speziell ausgestaltete Zielobjekte plaziert werden. Diese bestehen meist aus einem Lotstock mit einer anzielbaren Markierung bzw. einem Reflektor zur Definition der Messtrecke bzw. des Messpunktes. Zur Vermessung werden dabei meist Theodoliten oder Totalstationen mit Entfernungs- und Winkelmessfunktionalität als zentrale Messeinheiten verwendet, wobei durch eine zentrale Einheit auch eine grössere Zahl von Zielobjekten vermessen werden kann, was deren Identifikation erforderlich macht. Bei solchen Vermessungsaufgaben werden zur Steuerung des Messvorgangs sowie zur Festlegung oder Registrierung von Messparametern eine Anzahl von Daten, Anweisungen, Sprache und weiteren Informationen zwischen Zielobjekt und zentraler Messeinheit übertragen. Beispiele für solche Daten sind die Identifikation des Zielobjekts, Neigung des Lotstocks, Höhe des Reflektors über Grund, Detektorkonstanten oder Messwerte wie Temperatur oder Luftdruck.

Die elektronische Intelligenz des Vermessungssystems bzw. deren Datenverarbeitungskapazität befinden sich jedoch fast durchwegs in der zentralen Messeinheit. Die Zielobjekte hingegen sind in der Regel passive, ohne elektronische Intelligenz ausgerüstete Objekte. Heutige Lösungen für die Kommunikation zwischen Zielobjekt und Messeinheit basieren auf Radio-Funk oder Wireless-GSM. Zudem erfolgt dabei die Übermittlung oft durch Sprache, so dass durch Verständnisprobleme Fehler entstehen können.

Im Stand der Technik werden verschiedene Ansätze zur Integration einer Datenübertragung in den Messprozess beschrieben.

Aus der US 6,133,998 sind ein Verfahren und eine Vorrichtung zur Zielsuche für geodätische Geräte bekannt. Dabei wird der abtastende Strahl der zielsuchenden Einheit von einem nahe beim Reflektor angeordneten Empfänger detektiert und diese Erfassung über Funk an die zielsuchende Einheit kommuniziert. Neben der durch die parallele Anordnung von Reflektor und Empfänger bedingte Grösse und Störanfälligkeit des Aufbaus ist insbesondere die Verwendung einer Funkverbindung nachteilig, da hierdurch eine erhöhter technischer Aufwand und geringe Kompaktheit folgen.

Eine Prismenvorrichtung mit einer zusätzlichen Empfangseinrichtung für die optische Übertragung von einem geodätischen Messgerät zur Prismenvorrichtung wird in der US 6,295,174 dargestellt. Dabei wird durch einen optischen Pfad aus dem Bereich des Reflektors Strahlung ausgekoppelt und zu einer Empfangsfläche des achsparallel angeordneten Empfängers übertragen. Durch zwei in unterschiedlichen Farben leuchtende LED wird der Empfangszustand angezeigt. Aufgrund der Anordnung mit zwei getrennten Komponenten und einer lichtleitenden Verbindung gestaltet sich der Aufbau komplex, störanfällig und wenig kompakt. Zudem erfolgt eine Datenübertragung nur in einer Richtung und es wird durch die aufgebrachte Verbindung das Reflexionsvermögen des Reflektors reduziert.

In der EP 0 716 288 wird ein Vermessungsgerät beschrieben, bei dem durch variables Unterbrechen eines vom Vermessungsgerät zu einer Zieleinheit emittierten Laserstrahls Informationen über die Abweichung der Zieleinheit von einer Sollposition übertragen werden. Dabei wird der Laser achsparallel zu dem eigentlichen Messlaser angeordnet und eine gegenüber dem Reflektor versetzte Empfängereinheit angestrahlt. Auch diese Anordnung weist eine geringe Kompaktheit und eine Kommunikation in nur einer Richtung auf.

Die optische Datenübertragung von einem tragbaren Entfernungsmessgerät zu einer Zieleinheit wird in der EP 1 176 429 geoffenbart. Auch diese Datenübertragung erfolgt nur in eine Richtung. Zudem ist das Gerät gattungsgemäss nur für kurze Entfernungen geeignet. Distanzmessungen und Datenübertragungen über grössere Entfernungen sind aufgrund der optischen Auslegung und der geringen Richtungsstabilität nicht durchführbar.

Aus der US 6,023,326 ist ein Vermessungssystem mit einem Vermessungsgerät und einem Zielobjekt mit einer Datenübertragung in beide Richtungen bekannt. An einer Vermessungsstange als Zielobjekt sind ein Reflektor, darunter ein optischer Detektor und darüber eine Signallichtprojektionseinheit in verschiedene Komponenten räumlich getrennt angeordnet. Die Signallichtprojektionseinheit erzeugt moduliertes Licht, das zur räumlichen Feinausrichtung in Richtung auf das Vermessungsgerät emittiert wird und auch zur Übertragung von Steuerinformationen genutzt werden kann. Zusätzlich kann vom Vermessungsgerät eine Datenübertragung zum Detektor erfolgen. Die Ausgestaltung der Vermessungsstange mit mehreren morphologisch separaten Komponenten ist jedoch komplex, störanfällig und wenig kompakt. Zudem weisen alle drei Komponenten jeweils eine eigene Strahl- bzw. Empfangsachse auf, wobei diese Achsen räumlich getrennt übereinander und gegenseitig nicht kollinear angeordnet sind. Zur Kommunikation werden zwei separierte Strahlgänge verwendet, die wiederum getrennte Optiken erfordern.

Damit verwenden die Ansätze des Stands der Technik morphologisch getrennte Komponenten, die mit einer gewissen Distanz zur die geodätische Messung definierenden optischen Achse des Reflektors angeordnet werden.

Eine Aufgabe der Erfindung ist die Automatisierung des Datenaustausches zwischen Zielpunktobjekt und zentraler Messeinheit.

Eine Aufgabe der vorliegenden Erfindung besteht darin, ein baulich integriertes geodätisches Zielobjekt bzw. eine Modulkomponente für ein solches Objekt bereitzustellen, mit dem eine Kommunikation zu einer Messeinheit erfolgen kann.

Eine weitere Aufgabe der Erfindung ist Reduzierung oder Vermeidung von Fehlern bei der Datenübertragung zwischen Zielobjekt und Messeinheit.

Eine weitere Aufgabe der Erfindung ist die Bereitstellung eines Zielobjektes mit nahe beieinander liegenden Sender- und Empfängerachsen, so dass die Erfassung und Kommunikation in der Messeinheit mit einer gemeinsamen Optik oder mit zwei achsparallelen Optiken mit geringem Achsabstand möglich ist.

Eine weitere Aufgabe besteht darin, die messtechnische Handhabung eines Systems aus Zielobjekt und Messeinheit zu vereinfachen.

Diese Aufgaben werden durch die Gegenstände des Anspruchs 1, 15 bzw. 16 oder der abhängigen Ansprüche gelöst bzw. die Lösungen weitergebildet.

Die Erfindung beruht auf einer baulichen Integration von Sende- und Empfangskanälen in eine gemeinsame Einheit mit einer Reflektorkomponente, wie z.B. einem Retroreflektor oder spezielleren Formen wie Tripel- oder Dreiecksprismen. Diese Auslegung erlaubt die Verwendung eines Transceivers als Sender-/Empfängerkombination in Verbindung mit einem passiven, optisch wirkenden Retroreflektor.

Dabei soll das Reflexionsvermögen des Reflektors nicht wesentlich reduziert werden während gleichzeitig die optischen Sende- und Empfangs-Achsen des Transceivers möglichst nahe bei der optischen Achse des Reflektors zu plazieren ist, wobei die Achse durch die Verbindungslinie zwischen Zentralstation und optischem Zentrum des Retroreflektors definiert ist.

Hierfür werden die optischen Eintritts- oder Austrittsflächen der Sende- und Empfangskanäle so angeordnet, dass ihre optischen Achsen identisch mit oder zumindest parallel und möglichst nahe zu der optischen Achse des Reflektors verlaufen. Besonders vorteilhaft ist es, wenn eine direkte Integration der Eintritts- oder Austrittsflächen in die ansonsten zur Reflektion genutzte Fläche erfolgt. Die Sende- und Empfangskanäle definieren dann die mit dem Zielobjekt verbundenen optischen Pfade von der Eintrittsfläche bis hin zur jeweiligen elektrooptischen Komponente, d.h. Sender oder Empfänger. Dabei kann der Kanal noch zusätzliche Umlenkelemente, Filter oder ähnliche Komponenten aufweisen.

Die optischen Öffnungen oder Aperturen für die Sende- oder Empfangskanäle können entweder am Rand der Reflektorfläche, bzw. in einer im Stand der Technik als Reflektorbereich genutzten Zone, oder in der Reflektorfläche selbst angeordnet werden. Der erste Ansatz bietet hinsichtlich einer modularen und damit eine Nachrüstbarkeit unterstützenden Formgestaltung Vorteile. Der zweite Ansatz erlaubt eine besonders nahe räumliche Anordnung der verschiedenen Achsen für Reflektor, Sender und Empfänger.

Hinsichtlich der allgemein für geodätische Anwendungen genutzten Zielobjekte können zwei generische Grundtypen identifiziert werden, für die auch eine entsprechende Integration realisierbar ist.

Eine erste Ausführungsform stellt der 360°-Reflektor dar, der grundsätzlich unabhängig von einer vorangehenden Ausrichtung nutzbar sein soll. Diese Ausführungsform wird zumeist aus mehreren in der Regel als Dreiecksprismen gestaltete Retroreflektoren zusammengesetzt, die in einer Randzone der dreiecksförmigen Reflektorfläche abgeschliffen werden können, ohne dass dabei die optisch wirksame Eintrittsöffnung wesentlich reduziert wird. An der abgeschliffenen Stelle können die Sende- und Empfangsöffnungen des Transceivers bzw. der Sende- und Empfangskanäle plaziert werden. Die Randzone sollte dabei auch noch möglichst nahe zum optischen Zentrum des Retroreflektors liegen. Aufgrund der mit ihren Tripelecken gegeneinander orientierten Dreiecksprismen verbleibt meist wenig Platz zur Integration der Transceiverkomponenten im Zentrum des durch die Reflektorflächen definierten Korpus. Deshalb können diese Komponenten entweder an der Ober- und/oder Unterseite im Inneren des Korpus oder aber ausserhalb des Bereichs der reflektierenden Fläche angeordnet werden, wobei die Verbindung zu den Sende- und Empfangsöffnungen durch entsprechende strahlführende Elemente der Sende- und Empfangskanäle bewirkt wird.

Eine zweite Ausführungsform betrifft einen einfach gerichteten Retroreflektor mit vorzugsweise dreiecksförmiger Eintrittsfläche, so dass dadurch möglichst lange Kanten entstehen. Zur Erzeugung einer Senderöffnung wird die zentral gelegene Tripelecke abgeschliffen, zur Erzeugung einer Empfangsöffnung wird wenigstens eine der Kanten durchlässig gestaltet, beispielsweise durch Abpolieren der Verspiegelungsschicht, so dass eine Apertur entsteht, wobei zusätzliche lichtleitende Komponenten aufgebracht werden können.

Bei diesen kompakten und morphologisch in einem Gehäuse integrierten Ausführungsformen liegen die verschiedenen Achsen nahe beieinander, so dass sowohl Anzielung des Reflektors, Emission der datenübertragenden Strahlung durch die Messeinheit als auch die Erfassung der vom Zielobjekt emittierten datenübertragenden Strahlung durch eine gemeinsame Optik oder durch baulich nahe beieinander angeordneten Optiken realisiert werden können.

Zur Übertragung von Daten durch die zentrale Messeinheit kann beispielsweise der ohnehin zur Entfernungsmessung verwendete Laserstrahl zusätzlich moduliert werden oder aber es wird in den identischen Strahlgang ein weiterer Laserstrahl eingekoppelt, so dass Messung und Datenübertragung optisch mit derselben Achse erfolgen. Da am Zielobjekt die optische Empfangsöffnung und der Reflektor morphologisch integriert sind, wird die Strahlung teilweise zur Datenauswertung empfangen als auch wieder zum Zweck der Entfernungsmessung durch die Messeinheit definiert zurückgesandt. Eine Datenübertragung zum Zielobjekt oder die Initialisierung einer Antwort durch das Zielobjekt kann aber neben der zur Vermessung selbst genutzten Strahlung auch durch Strahlung bewirkt werden, die für andere Zwecke genutzt wird, z.B. zur automatischen Zielsuche oder Zielerkennung.

Mit der gleichen Achse, oder zumindest nahe zu dieser Achse, wird Strahlung vom Sender des Zielobjektes emittiert. Diese kann dann beispielsweise durch das Objektiv einer Totalstation empfangen und durch auch für andere Zwecke vorhandene Komponenten, wie z.B. zur Zielsuche oder Zielerkennung, ausgewertet werden.

Durch die bauliche Integration wird somit eine erhöhte Kompaktheit und Robustheit des Aufbaus des Zielobjektes wie auch der zentralen Messeinheit erreicht. Zudem können bei der Messeinheit vorhandene Komponenten auch zur Datenübertragung genutzt werden.

Durch den nahen Abstand von Sender und Empfänger zur Reflektorachse können die Divergenzen der Sendeeinheiten als auch die Gesichtsfelder der Empfangseinheiten von Zielobjekt und zentraler Messeinheit klein gehalten werden, dadurch verbessert sich sowohl die Signalrobustheit als auch die Reichweite. Die Wahrscheinlichkeit für Übertragungsfehler wird durch die bauliche Integration, insbesondere auch durch die Parallelität der beiden Sensorachsen im Zielobjekt, in beide Richtungen erheblich reduziert.

Zwar wird durch die bauliche Plazierung von Sender- und Empfangsöffnung innerhalb der wirksamen Reflektoröffnung diese leicht reduziert, jedoch kann im Vergleich zum Stand der Technik durch die nun zugänglichen kleinen Divergenzen der Messbündel der zentralen Messeinheit die Bestrahlungsstärke und dadurch die Signalrobustheit erheblich gesteigert werden.

Zudem können beispielsweise folgende bisher manuell gelöste Aufgaben beim Vermessungsprozess automatisiert ausgeführt werden
1. Unterstützung des Ziel-Suchprozesses: Nach dem erstmaligen Anzielen auf ein vermeintliches Zielobjekt übermittelt das Zielobjekt nach dem Empfang der Messstrahlung die Ziel-Identifikation zur Zentralstation, dies kann beispielsweise die Reflektornummer oder der Reflektortyp sein. Die Zentralstation kann sich damit auf das gesuchte Zielobjekt optimal konfigurieren, beispielsweise das geeignete Distanzmessprogramm nutzen, z.B. für reflektorlose Messungen oder für solche mit einem Reflektor.
2. Übertragung der Zielobjektparameter, wie z.B. Zielpunkthöhe oder die Additionskonstante für die Distanzmessung.
3. Neigungsüberwachung am Lotstock.
4. Neigungsübertragung vom Lotstock zur Zentralstation und Korrektur der abgeleiteten Koordinaten.
5. Übertragung der Punktnummer bei einem wiederholten Anzielen desselben Reflektors.
6. Konfigurierbarkeit der zu übertragenen Parameter, z.B. eine Auswahl aus den Parametern oder die Wahl eines zu verwendenden Datenformats.
7. Übertragung von Meteodaten wie Temperatur, Feuchte und Luftdruck.

Die den Messprozess unterstützenden Funktionen erleichtern die Arbeit bei unterschiedlichsten Anwendungen wie z.B. bei
- Anwendungen für 2-Mann-Vermessungsaufgaben mit Lotstockträger,
- Monitoring von fest installierten Zielobjekten, beispielsweise zur Bauwerksüberwachung,
- Automatisierten 1-Mann-Vermessungsaufgaben, bei welchen die Person das Gesamtsystem vom Lotstock aus bedient,
- Zielsuche und Zielidentifikation bei Nacht. Die Sendeeinheit des Zielobjekts leuchtet dann ggf. auch mit sichtbarer Strahlung.

Das erfindungsgemässe Zielobjekt und ein erfindungsgemässe Modulkomponente werden nachfolgend anhand von in der Zeichnung schematisch dargestellten Ausführungsbeispielen rein beispielhaft näher beschrieben. Im einzelnen zeigen
- Fig.1: die Darstellung eines Vermessungssystems mit einem Zielobjekt nach dem Stand der Technik;
- Fig.2: die Darstellung eines Vermessungssystems mit Zielobjekten nach dem Stand der Technik und der erfindungsgemäss zu erzielenden Funktionalität;
- Fig.3a-b: die Darstellung eines Rundumreflektors nach dem Stand der Technik und eines ersten Ausführungsbeispiels eines erfindungsgemässen Zielobjekts;
- Fig.4: die Darstellung der kompakten geometrischen Verhältnisse des ersten Ausführungsbeispiels;
- Fig.5: die Darstellung der Nutzung von Modulkomponenten zur Realisierung des ersten Ausführungsbeispiels;
- Fig.6: die Darstellung der Transceiverkomponenten des ersten Ausführungsbeispiels aus der Vogelperspektive;
- Fig.7a-c: die Darstellung eines einfachen Retroreflektors als ein zweites Ausführungsbeispiel des erfindungsgemässen Zielobjekts;
- Fig.8: die Darstellung der Reflektorfläche des zweiten Ausführungsbeispiels mit optischer Sende- und Empfangsöffnung;
- Fig.9: die Darstellung der Reflektorfläche eines dritten Ausführungsbeispiels mit optischer Sende- und Empfangsöffnung;
- Fig.10: die Darstellung eines Systems aus erfindungsgemässem Zielobjekt und einer Messeinheit mit gemeinsamer Sende- und Empfangsoptik und
- Fig.11: die Darstellung eines Systems aus erfindungsgemässem Zielobjekt und einer Messeinheit mit paralleler Sende- und Empfangsoptik.

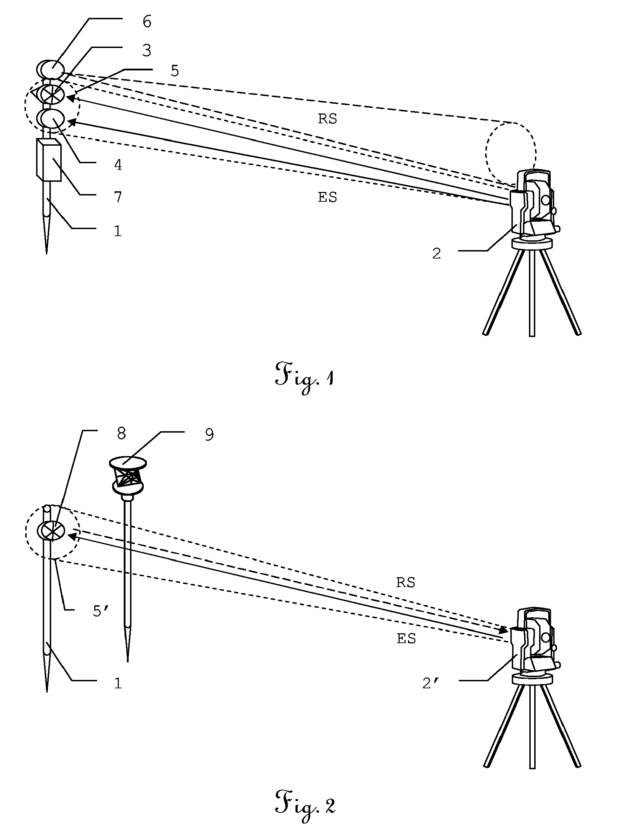

Fig.1 zeigt ein Vermessungssystem mit einem Zielobjekt nach dem Stand der Technik und einer zentralen Messeinheit 2. Das Zielobjekt besteht aus einem Lotstock 1, an dem ein Reflektor 3, ein Empfänger 4 für die von der Messeinheit 2 emittierte Strahlung ES und ein Sender 6 zur Aussendung von rückemittierter Strahlung RS angeordnet sind. Zur Steuerung der separaten Komponenten kann eine ebenfalls getrennt ausgeführte Bedien- und Steuereinheit 7 Verwendung finden. Die emittierte Strahlung ES weist einen Strahlquerschnitt 5 auf, der bei grösseren Entfernungen sowohl Reflektor 3 als auch Empfänger 4 abdeckt und somit eine zeitlich parallele Datenübertragung und Messung ermöglicht. Diese hinreichende Abdeckung der beiden Komponenten wird jedoch im Nahbereich zunehmend schlechter und kann auch ganz entfallen, so dass unterhalb einer Schwellenentfernung entweder keine Messung oder keine Datenübertragung zum Zielobjekt mehr stattfinden kann. Zudem muss der Sender 6 die rückemittierte Strahlung RS mit einer Divergenz aussenden, die eine sichere Erfassung durch Empfangskomponenten der Messeinheit 2 gewährleistet.

Deshalb treten auch bei mittleren bis grösseren Distanzen Probleme auf, da das Signal wegen der notwendig grossen Strahldivergenz und damit grossen Strahlquerschnitts 5 rasch geringer wird und das schlechte Signal-RauschVerhältnis eine Messung oder Datenübertragung zum Zielobjekt bzw. zurück zur Messeinheit 2 verhindert. Die kritischen Distanzen sind dabei durchwegs kürzer als bei den geodätischen Anforderungen typisch.

Bei einer Verkantung des Lotstocks 1 kann das Problem auftreten, dass die mit ihren Achsen übereinander angeordneten Komponenten, denen jeweils entsprechende Komponenten der Messeinheit 2 zugeordnet sind, ausserhalb des Strahlquerschnitts 5 bzw. des Erfassungsbereichs des Empfängers der Messeinheit 2 liegen. Um eine Deckung aller Achsen zu gewährleisten, muss für die Messung eine lotrechte Orientierung und präzise Ausrichtung eingehalten werden.

Zudem weisen die verschiedenen Komponenten das Problem der gegenseitigen Justierung und Ausrichtung, der mangelnden mechanischen Robustheit und eines vergleichsweise grossen Gewichts auf. Zudem gestaltet sich eine gemeinsame Stromversorgung von Sender 6 und Empfänger 4 aufwendig und störanfällig.

In Fig.2 erfolgt die Darstellung eines Vermessungssystems mit Zielobjekten nach dem Stand der Technik und der erfindungsgemäss zu erzielenden Funktionalität. Ein erstes gattungsgemässes geodätisches Zielobjekt ist ein einfacher Retroreflektor 8 an einem Lotstock 1. Ein zweites gattungsgemässes geodätisches Zielobjekt ist ein Rundumreflektor 9, der aus einzelnen Retro-Reflektorkomponenten zusammengesetzt ist und einen Bereich von 360° abdeckt. Die angestrebte Funktionalität liegt in der Integration aller zur Datenübertragung und Vermessung erforderlichen Sichtstrecken bzw. Strahlungsachsen innerhalb des zur Vermessung genutzten Strahlquerschnittes 5', welcher mit einer typischen Divergenz von 0.5 mrad bis 2 mrad dimensioniert ist. Die Empfänger- bzw. Senderachsen sind nahe an der zur Vermessung genutzten Zielachse positioniert, so dass Empfänger und Reflektor einerseits von der Messeinheit 2' auch bei kurzen Distanzen mit der emittierten Strahlung ES angeleuchtet werden, anderseits die vom Sender rückemittierte Strahlung RS innerhalb des Gesichtsfeldes der Messeinheit 2' liegt.

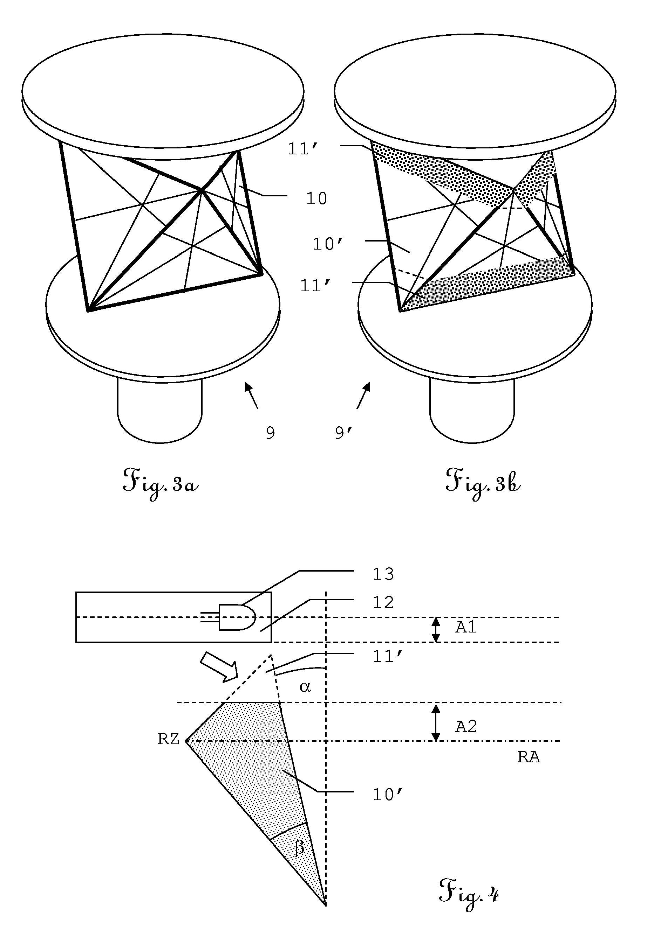

Ein Rundumreflektor als Zielobjekt wird in Fig.3a-b dargestellt. Dabei entspricht die Ausführungsform der Fig.3a einem ersten Rundumreflektor 9 des Stands der Technik, wohingegen Fig.3b einen zweiten Rundumreflektor 9' als ein erfindungsgemässes Zielobjekt darstellt. Der erste Rundumreflektor 9 weist in diesem speziell dargestellten Fall sechs Retroreflektoren 10 mit dreiecksförmiger Reflektorfläche auf, welche so aneinander gefügt sind, dass ihre Reflektorflächen zusammengefasst einen Polarwinkel von 360° abdecken. Im Folgenden werden die Retroreflektoren 10 mit dreiecksförmiger Reflektorfläche kurz Dreiecksprismen oder Tripelprismen genannt. Neben Dreiecks- oder Tripelprismen sind erfindungsgemäss auch andere Formen, wie z.B. Hohlspiegelreflektoren verwendbar.

Der zweite Rundumreflektor 9' weist ebenfalls sechs Dreiecksprismen 10' mit einem Polarwinkel von 360° auf, wobei an den Seitenlinien der Reflektorflächen Zonen 11' ausgenommen sind, in welche die Sende- und Empfangsöffnungen erfindungsgemäss kompakt und zur Vermessung genutzten Zielachse nah integriert werden. Grundsätzlich sind natürlich auch erfindungsgemässe Zielobjekte realisierbar, die einen kleineren Polarwinkel abdecken, z.B. 120° mit nur zwei oder 180° mit drei Retroreflektoren. Dies bietet sich z.B. bei der Nutzung eines Reflektors durch mehrere Messeinheiten unter unterschiedlichen Winkeln an. Solche Konstellationen können beispielsweise bei der Bauwerksüberwachung auftreten. Die optischen Sende- und Empfangsöffnungen nutzen damit Teile der Reflektorflächen bzw. Dreiecksprismen 10', die normalerweise zur Reflektion der Messstrahlung genutzt und deshalb auch durch den Strahlquerschnitt der emittierten Strahlung - zumindest teilweise - abgedeckt werden. Die durch Sende- und Empfangsöffnungen genutzten Zonen 11' sind somit in die ursprüngliche reflektierende Fläche integriert und schliessen unmittelbar an die nach der Modifikation verbleibende Reflektorfläche an, wobei eine gemeinsame Aussenfläche gebildet wird. Durch diese Ausgestaltung kann insbesondere eine feldtaugliche, robuste und staub- bzw. wassergeschützte Ausführung realisiert werden.

Fig.4 zeigt die Darstellung der geometrischen Verhältnisse bei einem ersten Ausführungsbeispiel des erfindungsgemässen Zielobjektes. Um die Sende- und Empfangskomponenten integrieren zu können, wird eine Seitenkante an der Reflektorfläche des Dreiecksprismas 10' entfernt, so dass eine nutzbare Zone 11' entsteht. In diese Zone 11' wird beispielsweise eine Kappe 12 gesetzt, die auch als Modulkomponente zur Nachrüstung von Rundumreflektoren des Stands der Technik ausgebildet sein kann. Die Kappe enthält die Sende- und Empfangskomponenten oder zumindest die optischen Öffnungen und geeignete optische Umlenkelemente. In dieser Ausführungsform, weist die Kappe für jede zugeordnete Reflektorfläche wenigstens eine Sende- und wenigstens eine Empfangskomponente auf, von denen hier rein exemplarisch eine lichtemittierende Diode (LED) als Strahlungsquelle 13 dargestellt ist. Damit werden die zur Kommunikation verwendeten Komponenten so plaziert, dass ihre Achsen nah an der Reflektorachse RA positioniert sind, wobei trotzdem eine nur minimale Einschränkung der Reflektoreigenschaften erfolgt. Dies kann durch eine Wahl eines möglichst geringen Abstandes A1 zwischen den Achsen von Strahlungsquelle 13 oder Empfangskomponenten bzw. der optischen Öffnungen und der unteren Begrenzung der Kappe sowie eines möglichst geringen Abstandes A2 zwischen Reflektorachse RA und der durch die Entfernung der Seitenkante gebildeten Begrenzung bzw. der nutzbaren Zone 11' ermöglicht werden. Durch die möglichst geringen Werte für diese Abstände A1 und A2 werden die Achsen von Strahlungsquelle 13 oder Empfangskomponenten und die Reflektorachse RA nahe beieinander liegend ausgerichtet. Die Reflektorachse RA ist im vorliegenden Fall durch die Verbindungslinie zwischen Reflexionszentrum RZ und Messeinheit 2 definiert. Als Mass für die Nähe des erfindungsgemässen Zielobjektes ist der Vergleich mit dem mittleren Radius der Eintritts- oder Reflektorfläche massgebend. Eine nahe Anordnung erfüllt die Bedingung, dass der Abstand der Empfangs- oder Sendekomponenten 13 zur Achse RA kleiner als der mittlere Radius der Reflektorfläche ist.

Die nur minimale Einschränkung der Reflektoreigenschaften wird durch die Neigung des Dreiecksprismas 10' um einen Winkel α von beispielsweise ca. 20° gegenüber der Senkrechten unterstützt, da hierdurch bezogen auf die Messeinheit die Pupille der Reflektorfläche optisch nach unten und damit weg von der Kappe 12 rückt. Das Dreiecksprisma 10' weist dabei einen Basiswinkel β von beispielsweise ca. 35° gegenüber der zur Messeinheit gerichteten Aussenfläche auf.

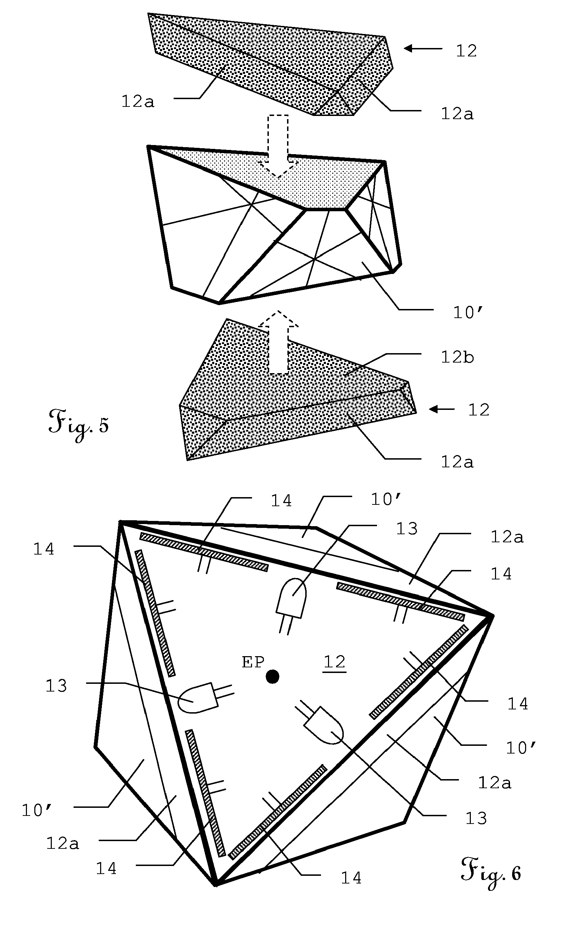

In Fig.5 wird die Nutzung von Kappen 12 als Modulkomponenten zur Realisierung des ersten Ausführungsbeispiels erläutert. Die mit ihren Basisflächen gegeneinander orientiert angeordneten Dreiecksprismen 10' werden jeweils an einer Spitze und an der Basisfläche längs einer Seitenkante anliegend zur Eintrittsfläche abgeschliffen, so dass zwei Kappen 12 mit den Sende- und Empfangskomponenten mit ihren Kontaktflächen 12b auf die Unter- und Oberseite des Rundumreflektors aufgesetzt werden können. Dabei sollen erfindungsgemäss die Sende- und Empfangsöffnungen möglichst nahe an dieser Kontaktfläche 12b ausgebildet werden, so dass in zusammengesetztem Zustand eine Anordnung in grösstmöglicher Nähe zum Reflexionszentrum folgt. Grundsätzlich ist eine Veränderung der Dreiecksprismen zur erfindungsgemässen Modifikation nicht erforderlich, da die Kappen 12 auch direkt auf die unmodifizierten Dreiecksprismen aufgesetzt werden können, wie sie in Fig.3a dargestellt sind, denn die Bedingung: "Abstand der Empfangs- oder Sendekomponenten zur Achse RA" ist kleiner als der "mittlere Radius der Reflektorfläche" ist auch in diesem Fall noch erfüllt. Als weitere Alternative ist erfindungsgemäss auch das direkte Aufbringen, z.B. durch Kleben, einer Sender-/Empfängerzeile auf Teilbereiche des Dreiecksprismas möglich. Mit der Verfügbarkeit von dünnen flächigen Materialien können auch Zeilen von Empfänger- und Sendedioden direkt auf die ansonsten nicht oder nur geringfügig modifizierte Oberfläche aufgebracht werden.

Fig.6 veranschaulicht die Anordnung der Sende- und Empfangskomponenten des ersten Ausführungsbeispiels in der Kappe 12 mit jeweils einer LED als Strahlungsquelle 13 pro Reflektorfläche bzw. Dreiecksprisma 10'. Der Blick erfolgt jetzt senkrecht nach unten bzw. aus der Vogelperspektive. Erfindungsgemäss sind vorzugsweise auch zwei oder mehr Strahlungsquellen 13 pro Dreiecksprisma 10' realisierbar, damit genügt bereits eine Divergenz der einzelnen Sender von lediglich ca. 30° um in horizontaler Richtung den gesamten 360°-Bereich abdecken zu können. Der kalkulatorische Endpunkt EP der Messstrecken liegt innerhalb der Kappe 12 in deren Zentrum. In vertikaler Richtung folgt ein Wirkbereich von ca. 30°, was für die meisten geodätischen Anwendungen genügt. Erfindungsgemäss können jedoch auch andere Öffnungswinkel und Zahlen von Strahlungsquellen 13 verwendet werden, z.B. 30 oder 12 Strahlungsquellen mit 12° und 30° Öffnungswinkel. Als Strahlungs- bzw. Lichtquellen sind Laser oder vorzugsweise LED im roten oder infraroten Bereich geeignet. LED unterliegen weniger strengen Sicherheitsbestimmungen, dadurch kann bei diesen Strahlungsquellen 13 mehr Leistung emittiert werden, so dass sich die Reichweite gegenüber anderen Spektralbereichen erhöht.

Auf beiden Seiten der Strahlungsquelle 13 sind in diesem Ausführungsbeispiel zwei Detektoren 14 zum Empfang der von der Messeinheit emittierten Strahlung angeordnet. Sowohl Sende- als auch Empfangskomponenten weisen mit ihren optischen Achsen direkt durch die Stirnfläche der 12a der Kappe 12, so dass pro Stirnfläche 12a zwei Empfangs- und eine Sendeöffnung realisiert sind. Die Stirnflächen 12a stellen somit die einer Reflektorfläche zugeordneten Flächen dar, die für eine Messung zu der Messeinheit orientiert sind. Sie können aus optisch durchlässigem Material gefertigt werden oder entsprechend ausgestaltete Bereiche aufweisen. Erfindungsgemäss ist auch ein Ausführungsbeispiel mit einem einzigen Detektor 14 in der Mitte der Stirnfläche und je einer Strahlungsquelle 13 auf beiden Seiten realisierbar. Ein solches Modul ist insbesondere für grössere Reichweiten vorteilhaft.

Im Inneren der Kappe 12 kann die Elektronik für die Sende- und Empfangskomponenten angeordnet werden. Bei ungünstigen räumlichen Gegebenheiten können anstelle von Strahlungsquellen 13 und Detektoren 14 auch strahlführende Elemente verwendet werden, so dass die eigentlichen Sende- und Empfangskomponenten an anderer Stelle, z.B. mit grösserem Abstand zu den Dreiecksprismen 10' angeordnet werden können. Auch in diesem Fall bleibt jedoch die erfindungsgemäss günstige zur Achse RA nahe Positionierung der optischen Modul-Achsen gewahrt.

Fig.7a-c zeigen die Darstellung eines einfach gerichteten Retroreflektors als ein zweites Ausführungsbeispiel des erfindungsgemässen Zielobjekts mit einer Empfangsöffnung 15b. Zur Ausgestaltung der Sende- und Empfangskanäle wird bei einem Dreiecksprisma 15 zur Ausbildung einer Sendeöffnung 15a die Tripelecke auf der optischen Achse entfernt, sowie zur Ausbildung der Empfangsöffnung 15b eine der Spiegel-Kanten abgeschliffen oder abpoliert. Wie in Fig.7a gezeigt kann dann hinter der Sendeöffnung 15a eine Strahlungsquelle 13 und auf der Empfangsöffnung 15b ein Glasprisma 16 aufgebracht werden, z.B. durch Aufkitten, so dass die optische Wirkung an die einer Planplatte angeglichen wird. Die streifenförmige Empfangsöffnung 15b gestattet eine kompakte, lichtstarke und insbesondere achsennahe Bauweise der Empfängereinheit. Dabei dient die abpolierte Spiegel-Kante als Tragelement für den Empfangskanal, anderseits ist durch die bei Dreiecksprismen im Vergleich zu Rundprismen längeren Kanten der Lichtleitwert vergrössert.

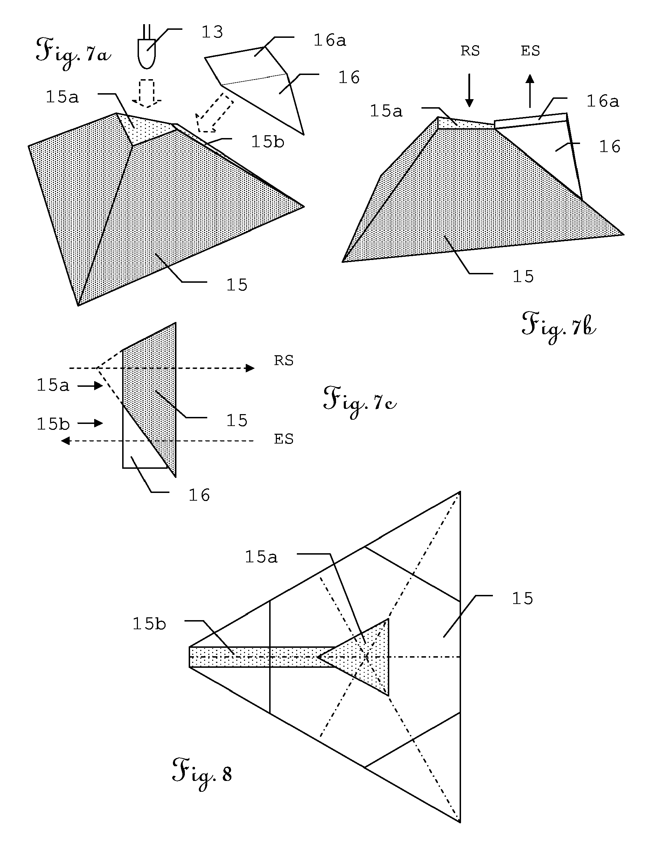

Der zusammengefügte Zustand wird in Fig.7b und in Fig.7c gezeigt. Die rückemittierte Strahlung RS wird durch die Sendeöffnung 15a auf die Messeinheit hin ausgesandt. Die Nähe der Sendeachse zur Reflektorachse RA ist bei diesem Ausführungsbeispiel optimal. Auch die Positionierung der Achse der Empfangseinheit zur Reflektorachse RA ist kompakt, denn sie befindet sich innerhalb der Reflektorfläche, und die Bedingung: "Abstand der Empfangs- oder Sendekomponenten zur Achse RA" ist kleiner als der "mittlere Radius der Reflektorfläche" ist erfüllt. Die von der Messeinheit emittierte Strahlung ES wird nach dem Empfang durch die Austrittsfläche 16a des Glasprismas 16 als Element des Empfangskanals auf den Detektor geführt. Dabei können auch im Sende- und Empfangskanal hinter den modifizierten Retroreflektor sowohl ein Sendekollimator als auch Empfangskollimator plaziert und im Bedarfsfall als Vorbaugruppen parallel zueinander justiert werden.

In Fig.8 erfolgt die Darstellung der Reflektorfläche des Dreiecksprismas 15 des zweiten Ausführungsbeispiels. In der Reflektorfläche sind aus Sicht der Messeinheit die Aperturen der optischen Sendeöffnung 15a und einer Empfangsöffnung 15b erkennbar.

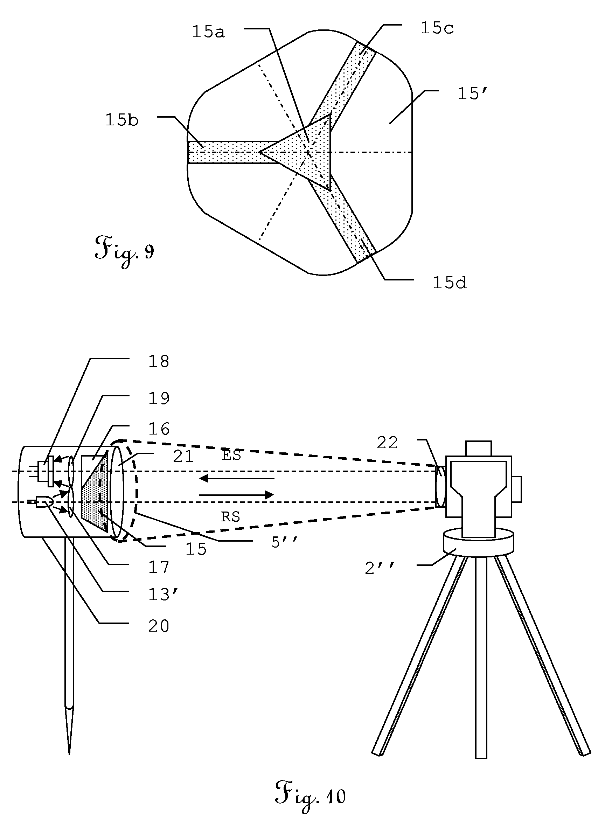

Eine Modifikation der Reflektorfläche bei der Ausgestaltung des Empfangskanals eines dritten Ausführungsbeispiels als Tripelprisma mit abgerundeten Ecken zeigt Fig.9. Durch Abpolieren von drei rückseitigen Kanten eines Retroreflektors 15' werden drei Eintrittsöffnungen 15b-d eines Empfangskanals geschaffen. Drei abpolierte Kanten sind insbesondere bei Rundprismen oder Reflektoren mit abgerundeten Ecken der Eintrittsfläche von Vorteil, da dadurch gegenüber einem Dreiecksprisma die wirksame Detektionsfläche nicht reduziert wird. Grundsätzlich können diese Eintrittsflächen aber auch hinsichtlich ihrer Funktion anders ausgestaltet werden. Insbesondere kann eine dieser Aperturen auch als weitere Sendeöffnung genutzt werden. Im Prinzip können somit die Funktionen der vier möglichen optischen Kanäle frei gewählt werden. Besteht der Bedarf einer Zielmarke in der Mitte des Retroreflektors - denn nun fehlt ja wegen der abpolierten Tripelecke das optische Kreuz, welches für den Geodäten bis 300m als Zielmarke dient - so kann eine Markierung aufgebracht oder entsprechend projiziert werden.

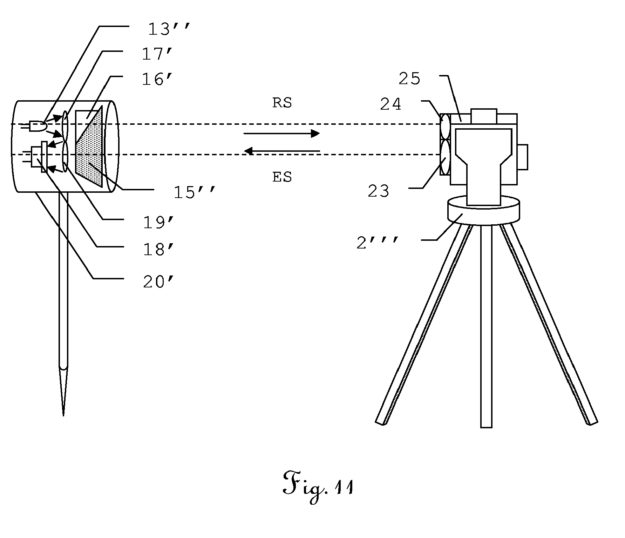

Fig.10 veranschaulicht die Funktion eines Systems aus erfindungsgemässem Zielobjekt und einer zentralen Messeinheit 2" mit gemeinsamer Sende- und Empfangsoptik 22. In einem Gehäuse 20 eines erfindungsgemässen Zielobjekts ist hinter einer Abdeckung 21 ein Retroreflektor, insbesondere ein Dreiecksprisma 15, mit einem aufgekitteten Glasprisma 16 und wenigstens zwei ausgebildeten optischen Kanälen angeordnet, so dass durch die nachgeordnete Strahlungsquelle 13' bzw. den Detektor 18 emittierte Strahlung ES empfangen bzw. rückemittierte Strahlung RS ausgesandt werden können. Zu diesem Zweck sind Strahlungsquelle 13' bzw. Detektor 14 jeweils ein Sendekollimator 17 und ein Empfangskollimator 19 zugeordnet. Damit liegen sowohl die Empfangs- als auch die Sendeöffnung innerhalb des Strahlquerschnitts 5" der emittierten Strahlung ES bzw. innerhalb des Erfassungsbereichs der Sende- und Empfangsoptik 22 der Messeinheit 2''.

In Fig.11 wird ein System aus erfindungsgemässem Zielobjekt und einer Messeinheit 2''' mit parallel angeordneter Messoptik 23 und Empfangsoptik 24 dargestellt, wobei die Empfangsoptik 24 beispielsweise auch in einem nachrüstbaren Deckel 25 der Messeinheit 2''' plaziert sein kann. Ist die Messeinheit 2''' somit mit einem biaxialen Empfängersystem ausgerüstet, so eignet sich die neben der optischen Achse des Retroreflektors angeordnete Kante als Sendekanal. Der Empfänger wäre in diesem Fall in der Mitte des Retroreflektors plaziert. Die Anordnung von Sende- und Empfangskanal wird somit invertiert, d.h. in dem Gehäuse 20' des Zielobjekts sind nun die Komponenten Detektor 18' und Empfangskollimator 19' im Zentrum hinter der abgeschliffenen Tripelecke des Retroreflektors 15'', angeordnet. Die Sendekomponenten Strahlungsquelle 13", Sendekollimator 17' und ein Glasprisma 16' befinden sich optisch in einem durch eine Kante des Retroreflektors 15" geführten Strahlgang, wobei die Nähe der Empfangseinheit zum Reflexionszentrum des Reflektors und die Nähe der Sendereinheit als ein Teil der Reflektorfläche offensichtlich sind.

In den Figuren sind die Vermessungssituationen, Zielobjekte und Messeinheiten rein schematisch dargestellt. Insbesondere können aus den Darstellungen keine Grössenverhältnisse oder Details der Vermessung entnommen werden. Die nur exemplarisch dargestellten Zielobjekte stehen stellvertretend auch für andersartige zur Vermessung verwendete Strukturen bzw. die einen zu vermessenden Punkt definierenden Elemente.

## Patentansprüche

1. Geodätisches Zielobjekt mit
• wenigstens einer Reflektorfläche, insbesondere eines optischen Retroreflektors,
• einem Empfangskanal mit einem Detektor (14,18,18') zum Empfang elektromagnetischer Strahlung (ES) und einer optischen Empfangsöffnung,
• einem Sendekanal mit einer Strahlungsquelle (13,13') zur Emission modulierter elektromagnetischer Sendestrahlung (RS), insbesondere im visuellen oder infraroten Bereich, und einer optischen Sendeöffnung,
**dadurch gekennzeichnet, dass**
die Sendeöffnung (15a) und/oder die Empfangsöffnung (15b, 15c, 15d)
o in die Reflektorfläche integriert oder
o an die Reflektorfläche anschliessend
ausgebildet sind.

2. Geodätisches Zielobjekt nach Anspruch 1,
**dadurch gekennzeichnet, dass**
Abstand der Empfangs- und der Sendeöffnung zur Reflektorachse (RA) kleiner als der mittlere Radius der Reflektorfläche ist, wobei die Reflektorachse (RA) als Verbindungslinie zwischen Reflexionszentrum (RZ) und Messeinheit (2) definiert ist.

3. Geodätisches Zielobjekt nach Anspruch 1 oder 2,
**dadurch gekennzeichnet, dass**
die Reflektorfläche Teil eines Tripelprismas (10,10',15,15',15") ist.

4. Geodätisches Zielobjekt nach Anspruch 3,
**gekennzeichnet durch**
wenigstens zwei Tripelprismen (10,10'), insbesondere sechs Tripelprismen (10,10'), wobei die sechs Tripelprismen (10,10') so ausgebildet und angeordnet sind, dass **durch** die Reflektorflächen ein Polarwinkel von 360° abgedeckt ist.

5. Geodätisches Zielobjekt nach Anspruch 3 oder 4,
**dadurch gekennzeichnet, dass**
jedem Tripelprisma (10,10',15,15',15'') wenigstens eine Strahlungsquelle (13,13',13") und wenigstens ein Detektor (14,18,18'), insbesondere zwei Detektoren (14,18,18'), zugeordnet sind.

6. Geodätisches Zielobjekt nach Anspruch 5,
**dadurch gekennzeichnet, dass**
jedem Tripelprisma (10,10',15,15',15'') wenigstens zwei Strahlungsquellen (13,13',13") zugeordnet sind.

7. Geodätisches Zielobjekt nach Anspruch 5 oder 6,
**dadurch gekennzeichnet, dass**
die Sendeöffnung und die Empfangsöffnung an eine Seite des wenigstens einen Tripelprismas (10,10') anschließend angeordnet sind.

8. Geodätisches Zielobjekt nach Anspruch 7,
**dadurch gekennzeichnet, dass**
die wenigstens eine Strahlungsquelle (13) und der wenigstens eine Detektor (14) in einem modularen Gehäuse (12) angeordnet sind.

9. Geodätisches Zielobjekt nach Anspruch 3,
**dadurch gekennzeichnet, dass**
wenigstens eine Kante des Tripelprismas (15,15') als Empfangsöffnung (15b,15c,15d) ausgebildet ist.

10. Geodätisches Zielobjekt nach Anspruch 9,
**dadurch gekennzeichnet, dass**
auf die wenigstens eine Kante des Tripelprismas (15,15') ein Prisma (16,16') zur Strahlführung aufgebracht ist.

11. Geodätisches Zielobjekt nach Anspruch 3, 9 oder 10,
**dadurch gekennzeichnet, dass**
das Zentrum des Tripelprismas (15,15') als Sendeöffnung (15a) ausgebildet ist, insbesondere durch eine abgeplattete Tripelecke.

12. Geodätisches Zielobjekt nach Anspruch 3,
**dadurch gekennzeichnet, dass**
das Zentrum des Tripelprismas (15") als Empfangsöffnung ausgebildet ist, insbesondere mit wenigstens einer als Sendeöffnung ausgebildeten Kante des Tripelprismas (15'').

13. Geodätisches Zielobjekt nach Anspruch 11 oder 12,
**dadurch gekennzeichnet, dass**
im Zentrum des Tripelprismas (15,15',15'') die Darstellung einer Zielmarke erfolgt, insbesondere durch eine Projektion.

14. Geodätisches Zielobjekt nach einem der Ansprüche 9 bis 13,
**dadurch gekennzeichnet, dass**
ein Sendekollimator (17,17') und/oder Empfangskollimator (19,19') in Empfangsrichtung hinter dem Tripelprisma (15,15',15") angeordnet ist.

15. Modulkomponente für ein geodätisches Zielobjekt nach Anspruch 8 mit
o einem Gehäuse (12),
o einem Empfangskanal mit einem Detektor (14) zum Empfang elektromagnetischer Strahlung (ES) und einer optischen Empfangsöffnung,
o einem Sendekanal mit einer Strahlungsquelle (13) zur Emission modulierter elektromagnetischer Sendestrahlung (RS), insbesondere im visuellen oder infraroten Bereich, und einer optischen Sendeöffnung,
wobei die Sendeöffnung und die Empfangsöffnung an einer Stirnfläche (12a) des Gehäuses (12) angeordnet sind.

16. Verfahren zur Datenübertragung bei geodätischen Messungen zur Positionsbestimmung eines geodätischen Zielobjekts, mit
• einer geodätischen Meßeinheit (2",2"') mit einer Meßstrahlungsquelle,
• dem geodätischen Zielobjekt mit einer Reflektorfläche und einer Sendestrahlungsquelle (13,13',13'') zur Erzeugung modulierter Sendestrahlung (RS),
und
- einem Emittieren von Meßstrahlung (ES) mit einer Meßstrahlachse und einem Meßstrahlquerschnitt (5'') auf das Zielobjekt,
- einem Empfangen zurückgestrahlter Meßstrahlung durch die Meßeinheit (2'',2'''),
- einem Bestimmen der Position des Zielobjekts und
- einem datenübertragenden Rückemittieren der Sendestrahlung (RS) auf die Meßeinheit (2",2"'),
**dadurch gekennzeichnet, dass**
sich beim Zielobjekt sowohl die Empfangsöffnung für die Meßstrahlung (ES) als auch die Sendeöffnung der Sendestrahlung RS innerhalb der Fläche des Meßstrahlquerschnitts (5") befinden.
